# EUROPÄISCHE PATENTSCHRIFT

(11) **EP 1 996 365 B1**
(45) Veröffentlichungstag und Bekanntmachung des Hinweises auf die Patenterteilung: **27.01.2010**
(21) Anmeldenummer: 07718360.6
(22) Anmeldetag: 21.03.2007
(51) Int. Cl.: B23K 20/12

(54) **VERFAHREN UND VORRICHTUNG ZUM VERSCHWEISSEN VON ELEMENTEN AUS METALLISCHEN WERKSTOFFEN**
METHOD AND DEVICE FOR WELDING ELEMENTS MADE OF METALLIC MATERIALS
PROCEDE ET DISPOSITIF DE SOUDAGE D'ELEMENTS EN MATERIAUX METALLIQUES

(30) Priorität: 21.03.2006 AT 4732006
(43) Veröffentlichungstag der Anmeldung: 03.12.2008
(73) Patentinhaber: EVG Entwicklungs- u. Verwertungs- Gesellschaft m.b.H., A-8074 Raaba (AT)
(72) Erfinder: RITTER, Klaus, A-8042 Graz (AT)
(74) Vertreter: Holzer, Walter
(86) Internationale Anmeldenummer: PCT/AT2007/000135
(87) Internationale Veröffentlichungsnummer: WO 2007/106921

(56) Entgegenhaltungen:
- WO-A-2005/113188
- US-A- 3 732 613

## Beschreibung

Die Erfindung betrifft ein Verfahren und eine Vorrichtung zum Verschweißen von zwei einander unter einem wählbaren Winkel kreuzenden länglichen Elementen aus metallischen Werkstoffen nach der Reibschweißmethode.

Aus der WO-A1-2005/113189 ist ein Verfahren zum Verschweißen von zwei einander unter einem wählbaren Winkel kreuzenden länglichen Elementen nach der Reibrührschweißmethode bekannt. Hierbei werden die Elemente in einem vorbestimmten Abstand zueinander festgelegt, und in den von den Elementen gebildeten Öffnungsspalt wird ein Reibschweißwerkzeug in einem vorbestimmten Zuführwinkel zu den Elementen eingeführt. Das Reibschweißwerkzeug führt eine Relativbewegung zu den Elementen mit hoher Frequenz und vorzugsweise mit kleiner Amplitude aus, und zumindest eines der Elemente wird mit vorbestimmtem Druck an das Reibschweißwerkzeug angepreßt, wobei durch Reibung des Reibschweißwerkzeuges an den Elementen mit vorbestimmtem Anpreßdruck und vorbestimmter Dauer zumindest die dem Reibschweißwerkzeug benachbarten Bereiche der Elemente auf eine zum Verschweißen der Elemente notwendige Schmelztemperatur erwärmt werden. Nach Erreichen dieser Schmelztemperatur wird das Reibschweißwerkzeug rasch aus dem Bereich der Elemente herausgezogen, wobei der Anpreßdruck zwischen dem Reibschweißwerkzeug und den zu verbindenden Elementen kurzeitig gesteuert reduziert wird. Abschließend werden zum Verschweißen der Elemente diese im Bereich der Kreuzungsstelle mit vorbestimmtem Druck und mit vorbestimmter Dauer aneinandergepreßt, wobei unmittelbar nach dem Herausziehen des Reibschweißwerkzeuges der Anpreßdruck in kürzestmöglicher Zeit auf einen Maximalwert erhöht wird. Dieses Verfahren und diese Vorrichtung haben den Nachteil, daß die nötige Schmelztemperatur durch ein Hilfswerkzeug erzeugt wird, das nach dem Erreichen der Schmelztemperatur aus dem Bereich der Verbindungsstelle herausgezogen werden muß. Durch dieses Herausziehen werden gerade die durch die Reibung am wärmsten erhitzten Teile der zu verbindenden Elemente aus dem Bereich der Verbindungsstelle herausgerissen und gehen damit für das Verschweißen der Elemente verloren. Außerdem kühlt die Verbindungsstelle während des Herausziehens ab.

Aufgabe der Erfindung ist es, die geschilderten Nachteile des bekannten Verfahrens und der bekannten Vorrichtung zu vermeiden und ein Verfahren und eine Vorrichtung der einleitend angegebenen Art zu schaffen, die es ermöglicht, längliche Elemente durch Reibschweißen kraftschlüssig zu verbinden.

Ein erfindungsgemäßes Verfahren zum Verbinden von zwei einander unter einem wählbaren Winkel kreuzenden länglichen Elementen aus metallischen Werkstoffen nach der Reibschweißmethode ist dadurch gekennzeichnet, daß die beiden Elemente festlegbar sind, daß zumindest ein Element relativ zum anderen Element mit wählbarer Amplitude, wählbarer Frequenz und wählbarer Zeitdauer bewegbar ist, daß zumindest ein Element während der Reibbewegung mit wählbarem Druckverlauf an das andere Element anpreßbar ist, und daß zum endgültigen Verschweißen der beiden Elemente diese von der Reibbewegung schlagartig abgekoppelt und aus dem Wirkungsbereich der Reibbewegung ausgestoßen werden.

Gegenstand der Erfindung ist auch eine Vorrichtung zum Durchführen des Verfahrens, mit Einrichtungen zum Festlegen der zu verschweißenden Elemente, mit einer Einrichtung zum Aneinanderpressen der Elemente, und mit Einrichtungen zum Erzeugen einer Reibbewegung, dadurch gekennzeichnet, daß zum Festlegen der zu verschweißenden Elemente jeweils eine Klemmeinrichtung vorgesehen ist, daß zum Erzeugen der Reibbewegung bzw. der Reibbewegungen je ein Schwingkopf vorgesehen ist, wobei jeder Schwingkopf eine Klemmeinrichtung mit sich schnell öffnende Klemmzangen aufweist, daß eine ansteuerbare Anpreßeinrichtung zum Aneinanderpressen der' Elemente vorgesehen ist, daß zum Abkoppeln des sich bewegenden Elementes vom Schwingkopf und zum Ausstoßen des sich bewegenden Elementes aus dem Wirkungsbereich des Schwingkopfes eine ansteuerbare, auf das Element im Bereich der Verbindungsstelle einwirkende Ausstoß- und Anpreßeinrichtung vorgesehen ist, daß eine programmierbare Regeleinrichtung zur Regelung des Reibdruckes mit wählbarer Kurvenform vorgesehen ist, und daß eine Steuereinrichtung zum Ansteuern der Klemmeinrichtungen, der Anpreßeinrichtung, des Schwingkopfes und der Ausstoß- und Anpreßeinrichtung vorgesehen ist.

Weitere Merkmale und Vorteile der Erfindung werden nachfolgend an einem Ausführungsbeispiel unter Bezugnahme auf die Zeichnungen näher erläutert. Es zeigen: Fig. 1 einen schematischen Schnitt durch eine Reibschweißvorrichtung zur Durchführung des erfindungsgemäßen Verfahrens zum Verschweißen zweier länglicher Elemente, Fig. 2 ein Ausführungsbeispiel eines Arbeitsdiagramms, das die Reibgeschwindigkeit, den Anpreßdruck zwischen den zu verbindenden Elementen und die Einschweißtiefe während der Durchführung des Verfahrens zeigt, und Fig. 3 in schematischer Darstellung Momentaufnahmen der zu verbindenden Elemente in den Extremlagen während der Reibbewegung.

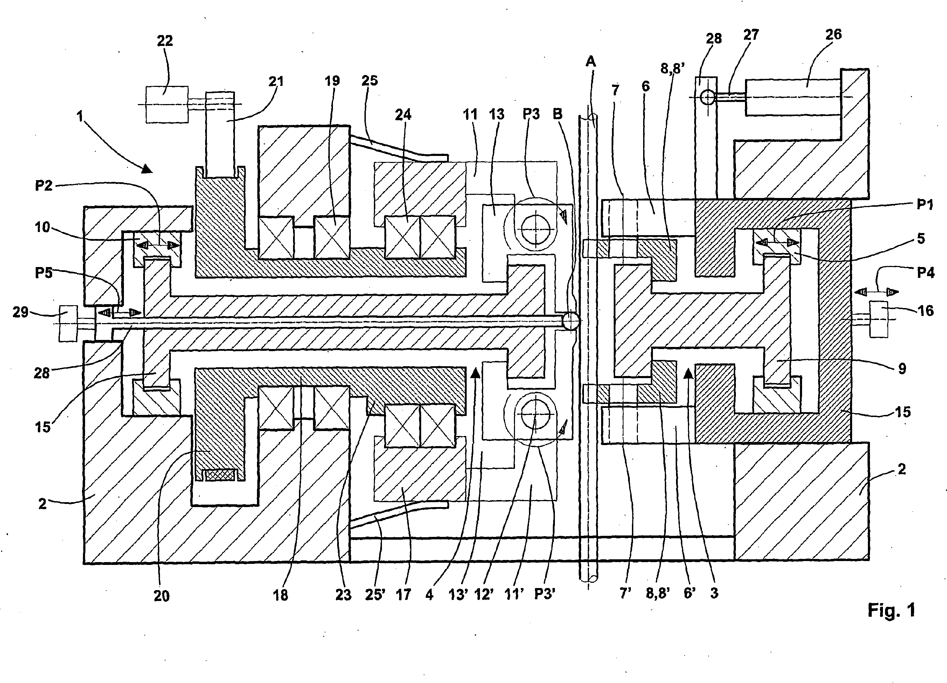

Die in Fig. 1 schematisch dargestellte Reibschweißeinrichtung 1 dient zum Verschweißen von zwei länglichen, metallischen Elementen A und B, die unter einem wählbaren Winkel angeordnet und in einem Kreuzungspunkt K miteinander verschweißt werden. Die Elemente A, B können im Rahmen der Erfindung beliebige Querschnitte aufweisen. Die Elemente A, B können beispielsweise Drähte oder Stäbe mit runden Querschnitten mit glatter oder gerippter Oberfläche sein, wobei die Durchmesser der Elemente A, B unterschiedlich sein können. Im Rahmen der Erfindung können die Elemente A, B auch unterschiedliche Querschnittsformen aufweisen, beispielsweise kann das Element A ein flaches Band mit rechteckigem Querschnitt sein, wie es bei Gitterrosten Anwendung findet, während das Element B eine runde oder mehreckige Querschnittsform besitzt. Die zu verbindenden Elemente A, B können im Rahmen der Erfindung aus gleichen oder unterschiedlichen metallischen Werkstoffen, beispielsweise aus Bewehrungsstahl, rostfreien Stahlqualitäten oder Aluminium bestehen.

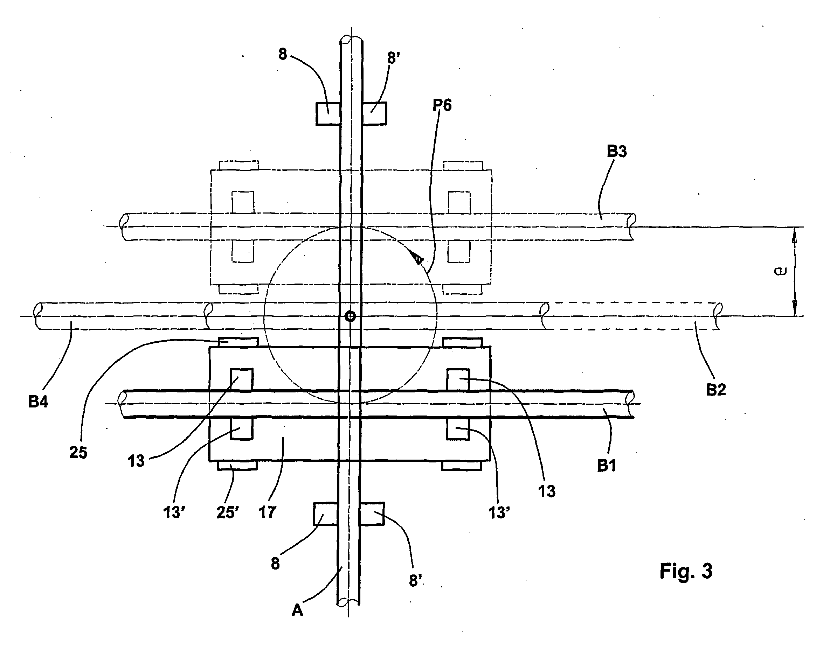

Die Reibschweißeinrichtung 1 weist ein Gehäuse 2 auf, in dem eine Klemmeinrichtung 3 zum Festklemmen des Elementes A und eine Klemmeinrichtung 4 zum Festklemmen des Elementes B angeordnet ist. Die Klemmeinrichtung 3 besteht im wesentlichen aus einer Betätigungseinrichtung 5, aus zwei Klemmhebeln 6, aus zwei, in den Klemmhebeln 6 im Drehpunkt 7 drehbar gelagerten Klemmzangenpaaren 8, 8' (Fig. 3) und aus einer von der Betätigungseinrichtung 5 in Richtung des Doppelpfeiles P1 bewegbaren, mit den Klemmzangenpaaren 8, 8' verbundenen Zugstange 9. Die Klemmeinrichtung 4 besteht im wesentlichen aus einer Betätigungseinrichtung 10, aus zwei Klemmhebeln 11, aus zwei, in den Klemmhebeln 11 im Drehpunkt 12 drehbar gelagerten Klemmzangenpaaren 13, 13' und aus einer von der Betätigungseinrichtung 10 in Richtung des Doppelpfeiles P2 bewegbaren, mit den Klemmzangenpaaren 13, 13' verbundenen Zugstange 14. In Fig. 1 sind nur die Drehbewegungen P3, P3' der Klemmzangen 13, 13' dargestellt. Die Betätigungseinrichtung 5 der Klemmeinrichtung 3 ist in einem Gegenhalter 15 angeordnet, an dem auch die beiden Klemmhebel 6 angeordnet sind. Der Gegenhalter 15 ist mit Hilfe einer Anpreßeinrichtung 16 in Richtung des Doppelpfeiles P4 bewegbar. Die Betätigungseinrichtung 10 der Klemmeinrichtung 4 ist im Gehäuse 2 angeordnet.

Die Reibschweißeinrichtung 1 weist einen Schwingkopf 17 auf, an dem die Klemmhebel 11 befestigt sind. Die Reibschweißeinrichtung 1 weist eine senkrecht zu den Elementen A und B verlaufende Antriebswelle 18 auf, die in einem rotationssymmetrischen Lager 19 im Gehäuse 1 gelagert ist. Die Antriebswelle 18 weist an dem von den Elementen A und B abgekehrten Ende ein Antriebsrad 20, beispielsweise ein Zahnrad, auf, das über einen Zahnriemen 21 mit einer Antriebseinrichtung 22 verbunden ist. Durch die Antriebseinrichtung 22 wird die Antriebswelle 18 in schnelle Rotationsbewegung versetzt. Das andere Ende 23 der Antriebswelle 18 ist exzentrisch ausgebildet. In diesem Exzenter 23 ist der Schwingkopf 17 in einem Exzenterlager 24 gelagert. Der Schwingkopf 17 wird außerdem in außen am Schwingkopf 17 anliegenden Parallelführungen 25 geführt.

Die Reibschweißeinrichtung 1 weist außerdem eine Meßeinrichtung 26 auf, die am Gehäuse 1 befestigt ist und deren Meßfühler 27 mit einer am Gegenhalter 15 befestigten Lasche 28 zusammenwirkt, wodurch die Bewegung des Gegenhalters 15 relativ zum Gehäuse 1 gemessen wird. Mit Hilfe dieser Meßeinrichtung 26 läßt sich das Nachsetzen der Elemente A, B während des Schweißvorganges und damit die Einschweißtiefe der Schweißstelle ermitteln.

In der Zugstange 15 der Klemmeinrichtung 4 ist ein Ausstoßstempel 29 gelagert, der durch einen Arbeitszylinder 30 in den Richtungen des Doppelpfeiles P5 bewegbar ist, und der mit seinem freien Ende auf das Element B im Bereich Schweißverbindungsstelle einwirken kann.

Die Reibschweißeinrichtung 1 weist eine programmierbare Regeleinrichtung zur Regelung des Reibdruckes R' mit wählbarer Kurvenform sowie eine Steuereinrichtung zum Ansteuern der Klemmeinrichtungen 3, 4, der Anpreßeinrichtung 16, der Antriebseinrichtung 22 für den Schwingkopf 17, und der Ausstoß- und Anpreßeinrichtung 29, 30 auf.

Die Reibschweißeinrichtung 1 arbeitet in folgender Weise:

Die länglichen Elemente A, B werden von nicht dargestellten Einrichtungen in die in Fig. 1 dargestellte Position gebracht und dort unter einem wählbaren Winkel in der Reibschweißeinrichtung 1 positioniert, wobei in Fig. 1 beispielsweise eine Winkel von 90° dargestellt ist. Durch Betätigung der Betätigungseinrichtungen 5, 10 der entsprechenden Klemmeinrichtungen 3 bzw. 4 in den entsprechenden Richtungen der Doppelpfeile P1, P2 werden die Elemente A, B durch die jeweiligen Klemmzangenpaare 8, 8'; 13, 13' in ihrer Lage zueinander festgelegt, wobei die Elemente A, B sich nur leicht berühren.

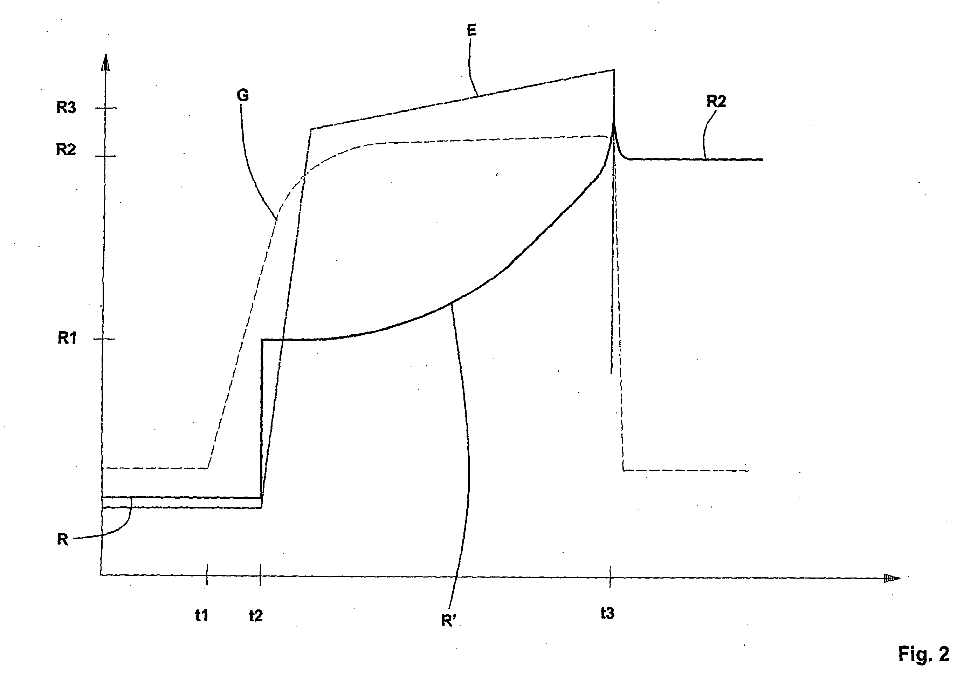

Fig. 2 zeigt schematisch ein Ausführungsbeispiel eines Arbeitsdiagramms für das Verschweißen von zwei glatten Bewehrungsstahldrähten mit einem Durchmesser von 6 mm und einer Streckgrenze von 550 N/mm². In diesem Diagramm sind die zeitlichen Verläufe der Reibgeschwindigkeit G, des Anpreßdruckes R zwischen den Elementen A, B sowie des Nachsetzweges E dargestellt, wobei der Nachsetzweg der Einschweißtiefe in den Elementen A, B entspricht. Aus Gründen der besseren Übersicht sind die jeweiligen Nullinien etwas nach oben verschoben eingezeichnet. Zum Zeitpunkt t1 wird die Antriebseinrichtung 22 in Betrieb gesetzt und die Drehgeschwindigkeit entsprechend dem Kurvenverlauf G gesteigert. Annähernd zum gleichen Zeitpunkt wird die Anpreßeinrichtung 16 aktiviert, wodurch der Gegenhalter 15 samt Klemmeinrichtung 3 in der entsprechenden Richtung des Doppelpfeiles P4 nach links bewegt wird, so daß das Element A an das Element B angepreßt wird. Kurze Zeit später, zum Zeitpunkt t2, setzt die kraftschlüssige Berührung der Elemente A, B ein, wodurch der Anpreßdruck R rasch auf einen Wert R1 ansteigt. Gleichzeitig beginnen sich die Elemente A, B zu erweichen, so daß ein Nachsetzen der Elemente A, B erfolgt, das als beginnende Einschweißtiefe zu werten ist. Mit Hilfe der Meßeinrichtung 26 läßt sich der Zeitpunkt t2 der beginnenden Erweichung exakt ermitteln, der den Anfangszeitpunkt für die nun einsetzende Regelung des Reibdruckes R' mit der entsprechenden wählbaren Kurvenform festlegt. Bei dem in Fig. 2 dargestellten Ausführungsbeispiel erfolgt die Druckerhöhung nach einer quadratischen Funktion. Im Rahmen der Erfindung sind auch andere Regelkurven, beispielsweise nach einer parabolischen oder e-Funktion möglich. Die Kurvenform wird von den zu verschweißenden Materialien, deren Querschnittsformen und deren Durchmesser bestimmt und list entsprechend anzupassen, um eine optimale, haltbare Schweißverbindung der Elemente A, B zu gewährleisten.

Nach einer wählbaren Zeit, zum Zeitpunkt t3, wird die Ausstoß- und Anpreßeinrichtung 30 aktiviert und der Ausstoßstempel 29 schlagartig in der entsprechenden Richtung des Doppelpfeiles P5 nach rechts vorgeschoben, wodurch unter gleichzeitiger Öffnung der Klemmzangen 13, 13' das Element B schlagartig vom Schwingkopf 17 abgekoppelt und aus dem Wirkungsbereich des Schwingkopfes 17 entfernt wird. Der Ausstoßstempel 29 bildet anschließend das Gegenlager für die Anpreßeinrichtung 16, die weiterhin mit dem konstanten Anpreßdruck R2 die beiden Elemente A, B zusammendrückt, wodurch die Schweißverbindung der beiden Elemente A, B verfestigt wird. Durch die schlagartige Bewegung P5 des Ausstoßstempels 29, die gegen die Wirkrichtung P4 der Anpreßeinrichtung 16 gerichtet ist, wird der Anpreßdruck R zwischen den Elementen A, B kurzzeitig auf einen Spitzenwert R3 erhöht, der die Schweißverbindung zwischen den Elementen A, B verbessert. Durch das schlagartige Abkoppeln des Schwingkopfes 17 vom Element B wird außerdem verhindert, daß das verflüssigte Material aus dem Bereich der Schweißverbindung herausgeschleudert und die Verbindungsstelle unnötig abgekühlt wird. Im Rahmen der Erfindung ist es jedoch auch nach dem Ausstoßen der Elemente A, B aus dem Wirkungsbereich des Schwingkopfes 17 möglich, den durch die Anpreßeinrichtung 16 erzeugten Anpreßdruck R2 rasch auf Null herabzuregeln. Dies ist immer dann wünschenswert, wenn beispielsweise aufgrund der Werkstoffeigenschaften der Elemente A, B die erzeugte Schweißverbindung zwischen den Elementen A, B ohne zusätzliche Druckbelastung abkühlen soll. Gegebenenfalls kann die Verbindungsstelle nahezu kraftlos durch den Ausstoßstempel 29 fixiert werden.

Im dargestellten Ausführungsbeispiel beträgt die Reibgeschwindigkeit 18000 Umdrehungen pro Minute, die Anpreßduckspitze ca. 140 bar, der konstante Anpreßdruck R2 ca. 110 bar, die Schweißzeit ca. 1,8 sec und die Einschweißtiefe E ca. 1,4 mm, wobei der Regelbereich des Reibdruckes R' zwischen ca. 70 und 110 bar liegt. Es versteht sich, daß im Rahmen der Erfindung diese Werte je nach Werkstoffeigenschaften und Abmessungen der Elemente sowie Anforderung an die Schweißverbindung unterschiedlich sind.

In Fig. 3 sind schematisch in Momentaufnahmen die Extremlagen B1, B2, B3, B4 des Elementes B während der Reibbewegung P6 dargestellt, wobei die maximale Auslenkung e der Reibbewegung, der sogenannte Exzenterradius, wegen der besseren Übersicht übertrieben groß dargestellt ist. Im oben beschriebenen Ausführungsbeispiel ist der Exzenterradius e gleich 1 mm.

Es versteht sich, daß das beschriebene Verfahren und das dargestellte Ausführungsbeispiel im Rahmen des allgemeinen Erfindungsgedankens verschiedentlich ausgestaltet werden können. Im Rahmen der Erfindung ist es möglich, die Reibbewegung in einer elliptischen Bewegung mit wählbaren Hauptachsen auszuführen. Hierbei verläuft die längere Hauptachse der Ellipse vorzugsweise parallel zur Längsrichtung des unbeweglichen Elementes A.

Des weiteren ist es im Rahmen der Erfindung möglich, die Reibbewegung in einer linearen Bewegung mit wählbarer Auslenkung auszuführen. Hierbei verläuft die Richtung der Linearbewegung vorzugsweise parallel zur Längsrichtung des unbeweglichen Elementes A.

Des weiteren ist es im Rahmen der Erfindung möglich, beide Elemente A, B eine entsprechende Reibbewegung ausführen zu lassen. In diesem Fall ist es von Vorteil, die Bewegungsrichtungen der jeweiligen Reibbewegungen gegenläufig verlaufen zu lassen.

## Patentansprüche

1. Verfahren zum Verbinden von zwei einander unter einem wählbaren Winkel kreuzenden länglichen Elementen (A, B) aus metallischen Werkstoffen nach der Reibschweißmethode, wobei die beiden Elemente (A, B) festlegbar sind, **dadurch gekennzeichnet daß** zumindest ein Element (B) relativ zum anderen Element (A) mit wählbarer Amplitude (e), wählbarer Frequenz (G) und wählbarer Zeitdauer (t1 bis t3) bewegbar ist, daß zumindest ein Element (A) während der Reibbewegung (P6) mit wählbarem Druckverlauf (R') an das andere Element (B) anpreßbar ist, und daß zum endgültigen Verschweißen der beiden Elemente (A, B) diese von der Reibbewegung (P6) schlagartig (t3) abgekoppelt und aus dem Wirkungsbereich der Reibbewegung (P6) ausgestoßen werden.

2. Verfahren nach Anspruch 1, **dadurch gekennzeichnet, daß** die Reibbewegung (P6) eine kreisförmige Bewegung mit wählbarem Radius (e) ist.

3. Verfahren nach Anspruch 1, **dadurch gekennzeichnet, daß** die Reibbewegung (P6) eine elliptische Bewegung mit wählbaren Hauptachsen ist, wobei die längere Hauptachse der Ellipse vorzugsweise parallel zur Längsrichtung des unbeweglichen Elementes (A) verläuft.

4. Verfahren nach Anspruch 1, **dadurch gekennzeichnet, daß** die Reibbewegung (P6) eine lineare Bewegung mit wählbarer Auslenkung ist, wobei die Richtung der Linearbewegung vorzugsweise parallel zur Längsrichtung des unbeweglichen Elementes (A) verläuft.

5. Verfahren nach einem der Ansprüche 1 bis 4, **dadurch gekennzeichnet, daß** der Anpreßdruck (R') während der Reibbewegung (P6) stetig, vorzugsweise nach einer quadratischen Funktion bis zu einem wählbaren Maximalwert (R2) vergrößerbar ist.

6. Verfahren nach einem der Ansprüche 1 bis 5, **dadurch gekennzeichnet, daß** beim Abkoppeln der Reibbewegung (P6) der Anpreßdruck (R) zwischen den Elementen (A, B) kurzzeitig auf einen Spitzenwert (R3) erhöht wird.

7. Verfahren nach einem der Ansprüche 1 bis 6, **dadurch gekennzeichnet, daß** nach dem Ausstoßen der Elemente (A,B) der Anpreßdruck (R) mit wählbarer Stärke (R2) und wählbarer Dauer weiterhin bis zum endgültigen Verschweißen der Elemente (A, B) auf die Elemente (A, B) einwirkt.

8. Verfahren nach Anspruch 7, **dadurch gekennzeichnet, daß** der Anpreßdruck (R) nach dem Abkoppeln (t3) der Reibbewegung (P6) mit konstanter, wählbarer Stärke (R2) auf die Elemente (A, B) einwirkt.

9. Verfahren nach Anspruch 7, **dadurch gekennzeichnet, daß** der Anpreßdruck (R) nach dem Abkoppeln (t3) der Reibbewegung (P6) rasch auf Null gesetzt wird.

10. Verfahren nach einem der Ansprüche 1 bis 9, **dadurch gekennzeichnet, daß** die Einschweißtiefe (E) der Elemente (A, B) meßbar ist, wobei der Beginn der Einschweißung den Anfangspunkt (t2) für eine Regelung des Reibdruckes (R') bestimmt.

11. Verfahren nach einem der Ansprüche 1 bis 10, **dadurch gekennzeichnet, daß** für den Fall, daß beide Elemente (A, B) je eine Reibbewegung ausführen, die Bewegungsrichtungen der jeweiligen Reibbewegungen gegenläufig sind.

12. Verfahren nach einem der Ansprüche 1 bis 11, **dadurch gekennzeichnet, daß** Elemente (A, B) mit unterschiedlichen Werkstoffeigenschaften verschweißbar sind.

13. Verfahren nach einem der Ansprüche 1 bis 12, **dadurch gekennzeichnet, daß** zumindest ein Element (A; B) einen nahezu kreisförmigen Querschnitt aufweist.

14. Verfahren nach einem der Ansprüche 1 bis 12, **dadurch gekennzeichnet, daß** zumindest ein Element (A; B) ein flaches Band mit einem rechteckigen Querschnitt ist.

15. Verfahren nach einem der Ansprüche 1 bis 14, **dadurch gekennzeichnet, daß** die Oberfläche der Elemente (A, B) eine Rippung aufweist.

16. Vorrichtung zum Durchführen des Verfahrens nach einem der Ansprüche 1 bis 15, mit Einrichtungen zum Festlegen der zu verschweißenden Elemente, mit einer Einrichtung zum Aneinanderpressen der Elemente und mit Einrichtungen zum Erzeugen einer Reibbewegung, **dadurch gekennzeichnet, daß** zum Festlegen der zu verschweißenden Elemente (A, B) jeweils eine Klemmeinrichtung (3; 4) vorgesehen ist, daß zum Erzeugen der Reibbewegung (P6) bzw. der Reibbewegungen je ein Schwingkopf (17) vorgesehen ist, wobei jeder Schwingkopf (17) eine Klemmeinrichtung (4) mit sich schnell öffnende Klemmzangen (13, 13') aufweist, daß eine ansteuerbare Anpreßeinrichtung (16) zum Aneinanderpressen der Elemente (A, B) vorgesehen ist, daß zum Abkoppeln des sich bewegenden Elementes (B) vom Schwingkopf (17) und zum Ausstoßen des sich bewegenden Elementes (B) aus dem Wirkungsbereich des Schwingkopfes (17) eine ansteuerbare, auf das Element (B) im Bereich der Verbindungsstelle einwirkende Ausstoß- und Anpreßeinrichtung (29, 30) vorgesehen ist, daß eine programmierbare Regeleinrichtung zur Regelung des Reibdruckes (R') mit wählbarer Kurvenform vorgesehen ist, und daß eine Steuereinrichtung zum Ansteuern der Klemmeinrichtungen (3, 4), der Anpreßeinrichtung (16), des Schwingkopfes (17) und der Ausstoß- und Anpreßeinrichtung (29, 30) vorgesehen ist.

17. Vorrichtung nach Anspruch 16, **dadurch gekennzeichnet, daß** zum Erzeugen einer kreisförmigen Reibbewegung (P6) der Schwingkopf (17) exzentrisch auf einer antreibbaren Antriebswelle (18) angeordnet ist, und daß der Schwingkopf (17) seitlich, vorzugsweise durch Parallelführungen (25, 25'), geführt wird.

18. Vorrichtung nach einem der Ansprüche 16 oder 17, **dadurch gekennzeichnet, daß** zum Messen der Einschweißtiefe und zum Festlegen des Anfangspunktes der Regelung des Reibdruckes (R') eine Meßeinrichtung (26) vorgesehen ist.

19. Vorrichtung nach einem der Ansprüche 16 bis 18, **dadurch gekennzeichnet, daß** die Ausstoß- und Anpreßeinrichtung einen Ausstoßstempel (29) aufweist, der auf das Element (B) im Bereich der Verbindungsstelle der Elemente (A, B) einwirkt.

20. Vorrichtung nach einem der Ansprüche 16 bis 19, **dadurch gekennzeichnet, daß** der Spitzenwert (R3) des Anpreßdrukkes (R) durch die Bewegung (P5) des Ausstoßstempels (29) gegen die Wirkrichtung (P4) der Anpreßeinrichtung (16) erzeugt wird.

## Claims

1. Method for connecting by friction welding, two elongate members (A, B) which cross one another at a selectable angle and are made of metal materials, the two members (A, B) possibly being fixed, **characterised in that** at least one member (B) can be moved relative to the other member (A) at a selectable amplitude (e), at a selectable frequency (G) and for a selectable duration (t1 to t3), **in that** at least one member (A) can be pressed against the other member (B) during the frictional motion (P6) with a selectable march of pressure (R'), and **in that** for the final welding of the two members (A, B), said members are abruptly (t3) decoupled from the frictional motion (P6) and ejected from the effective region of the frictional motion (P6).

2. Method according to claim 1, **characterised in that** the frictional motion (P6) is a circular motion with a selectable radius (e).

3. Method according to claim 1, **characterised in that** the frictional motion (P6) is an elliptical motion with selectable principal axes, the longer principal axis of the ellipse preferably extending parallel to the longitudinal direction of the fixed member (A).

4. Method according to claim 1, **characterised in that** the frictional motion (P6) is a linear motion with a selectable displacement, the direction of the linear motion preferably extending parallel to the longitudinal direction of the fixed member (A).

5. Method according to any one of claims 1 to 4, **characterised in that** during the frictional motion (P6), the contact pressure (R') can be increased continuously, preferably by a quadratic function, up to a selectable maximum value (R2).

6. Method according to any one of claims 1 to 5, **characterised in that** when decoupling the frictional motion (P6), the contact pressure (R) between the members (A, B) is briefly increased to a peak value (R3).

7. Method according to any one of claims 1 to 6, **characterised in that** after the ejection of the members (A, B), the contact pressure (R) further acts on the members (A, B) at a selectable strength (R2) and for a selectable duration until the members (A, B) are finally welded.

8. Method according to claim 7, **characterised in that** the contact pressure (R) acts on the members (A, B) with a constant, selectable strength (R2) after the decoupling (t3) of the frictional motion (P6).

9. Method according to claim 7, **characterised in that** the contact pressure (R) is rapidly set to zero after the decoupling (t3) of the frictional motion (P6).

10. Method according to any one of claims 1 to 9, **characterised in that** the welding depth (E) of the members (A, B) is measurable, the beginning of the weld determining the start-point (t2) for regulating the frictional pressure (R').

11. Method according to any one of claims 1 to 10, **characterised in that** in the case where the two members (A, B) each perform a frictional motion, the respective frictional motions are in opposite directions.

12. Method according to any one of claims 1 to 11, **characterised in that** members (A, B) with different material properties can be welded.

13. Method according to any one of claims 1 to 12, **characterised in that** at least one member (A; B) has an approximately circular cross-section.

14. Method according to any one of claims 1 to 12, **characterised in that** at least one member (A; B) is a planar strip with a rectangular cross-section.

15. Method according to any one of claims 1 to 14, **characterised in that** the surface of the members (A, B) comprises a ribbing.

16. Device for carrying out the method according to any one of claims 1 to 15, comprising means for fixing the members to be welded, comprising a means for pressing the members together and comprising means for producing a frictional motion, **characterised in that** a clamping means (3; 4) is provided for fixing each of the members (A, B) to be welded, **in that** a pivoting head (17) is provided in each case for producing the frictional motion (P6) or frictional motions, each pivoting head (17) comprising a clamping means (4) having rapidly opening clamping jaws (13, 13'), **in that** a controllable pressing means (16) is provided for pressing together the members (A, B), **in that** a controllable ejection and pressing means (29, 30) acting on the member (B) in the region of the connection point is provided for decoupling the moving member (B) from the pivoting head (17) and for ejecting the moving member (B) from the effective region of the pivoting head (17), **in that** a programmable regulating means for regulating the frictional pressure (R') and having a selectable curved shape is provided, and **in that** a control means is provided for controlling the clamping means (3, 4), the pressing means (16), the pivoting head (17) and the ejection and pressing means (29, 30).

17. Device according to claim 16, **characterised in that** to produce a circular frictional motion (P6), the pivoting head (17) is arranged eccentrically on a drivable drive shaft (18), and **in that** the pivoting head (17) is laterally guided, preferably by parallel guides (25, 25').

18. Device according to either claim 16 or claim 17, **characterised in that** a measuring means (26) is provided for measuring the welding depth and for fixing the start-point for the regulation of the frictional pressure (R').

19. Device according to any one of claims 16 to 18, **characterised in that** the ejection and pressing means comprises an ejection plunger (29) which acts on the member (B) in the region of the connection point of the members (A, B).

20. Device according to any one of claims 16 to 19, **characterised in that** the peak value (R3) of the contact pressure (R) is produced by the motion (P5) of the ejection plunger (29) against the effective direction (P4) of the pressing means (16).

## Revendications

1. Procédé de liaison, selon la méthode de soudage par friction, de deux éléments (A, B) allongés en matériaux métalliques se croisant selon un angle pouvant être choisi, les deux éléments (A, B) pouvant être fixés, **caractérisé en ce qu'**au moins un élément (B) peut être déplacé par rapport à l'autre élément (A) avec une amplitude (e) pouvant être choisie, une fréquence (G) pouvant être choisie et une durée (t1 à t3) pouvant être choisie, **en ce qu'**au moins un élément (A) peut être pressé contre l'autre élément (B) pendant le déplacement de friction (P6) avec une allure de pression (R') pouvant être choisie, et **en ce que** pour le soudage final des deux éléments (A, B), ceux-ci sont désaccouplés brusquement (t3) du déplacement de friction (P6) et sont éjectés du champ d'action du déplacement de friction (P6).

2. Procédé selon la revendication 1, **caractérisé en ce que** le déplacement de friction (P6) est un déplacement circulaire avec un rayon (e) pouvant être choisi.

3. Procédé selon la revendication 1, **caractérisé en ce que** le déplacement de friction (P6) est un déplacement elliptique avec des axes principaux pouvant être choisis, l'axe principal le plus long de l'ellipse s'étendant de préférence parallèlement au sens longitudinal de l'élément (A) immobile.

4. Procédé selon la revendication 1, **caractérisé en ce que** le déplacement de friction (P6) est un déplacement linéaire avec une déviation pouvant être choisie, le sens du déplacement linéaire s'étendant de préférence parallèlement au sens longitudinal de l'élément (A) immobile.

5. Procédé selon l'une quelconque des revendications 1 à 4, **caractérisé en ce que** la pression appliquée (R') pendant le déplacement de friction (P6) peut être augmentée en continu, de préférence selon une fonction quadratique jusqu'à une valeur maximale (R2) pouvant être choisie.

6. Procédé selon l'une quelconque des revendications 1 à 5, **caractérisé en ce que** lors du désaccouplement du déplacement de friction (P6), la pression appliquée (R) entre les éléments (A, B) est augmentée à court terme à une valeur maximale (R3).

7. Procédé selon l'une quelconque des revendications 1 à 6, **caractérisé en ce qu'**après l'éjection des éléments (A, B), la pression appliquée (R) agit en outre sur les éléments (A, B) avec une force (R2) pouvant être choisie et une durée pouvant être choisie jusqu'au soudage final des éléments (A, B).

8. Procédé selon la revendication 7, **caractérisé en ce que** la pression appliquée (R) agit sur les éléments (A, B) après le désaccouplement (t3) du déplacement de friction (P6) avec une force (R2) constante, pouvant être choisie.

9. Procédé selon la revendication 7, **caractérisé en ce que** la pression appliquée (R) est rapidement mise à zéro après le désaccouplement (t3) du déplacement de friction (P6).

10. Procédé selon l'une quelconque des revendications 1 à 9, **caractérisé en ce que** la profondeur de soudage (E) des éléments (A, B) peut être mesurée, le début du soudage déterminant le point de départ (t2) pour une régulation de la pression de friction (R').

11. Procédé selon l'une quelconque des revendications 1 à 10, **caractérisé en ce qu'**au cas où les deux éléments (A, B) réalisent chacun un déplacement de friction, les sens de déplacement de chaque déplacement de friction sont contraires.

12. Procédé selon l'une quelconque des revendications 1 à 11, **caractérisé en ce que** des éléments (A, B) aux propriétés de matériau différentes peuvent être soudés.

13. Procédé selon l'une quelconque des revendications 1 à 12, **caractérisé en ce qu'**au moins un élément (A, B) présente une section quasiment circulaire.

14. Procédé selon l'une quelconque des revendications 1 à 12, **caractérisé en ce qu'**au moins un élément (A, B) est une bande plate avec une section rectangulaire.

15. Procédé selon l'une quelconque des revendications 1 à 14, **caractérisé en ce que** la surface des éléments (A, B) présente une nervure.

16. Dispositif de réalisation du procédé selon l'une quelconque des revendications 1 à 15, avec des dispositifs de fixation des éléments à souder, avec un dispositif de pressage des éléments les uns contre les autres et avec des dispositifs de génération d'un déplacement de friction, **caractérisé en ce que** pour fixer les éléments (A, B) à souder, il est respectivement prévu un dispositif de serrage (3, 4), **en ce que** pour générer le déplacement de friction (P6) ou les déplacements de friction, une tête oscillante (17) est prévue, chaque tête oscillante (17) présentant un dispositif de serrage (4) avec des pinces de serrage (13, 13') s'ouvrant rapidement, **en ce qu'**un dispositif de pressage (16) pouvant être commandé pour le pressage des éléments (A, B) l'un contre l'autre est prévu, **en ce que** pour le désaccouplement de l'élément (B) mobile de la tête oscillante (17) et pour l'éjection de l'élément (B) mobile du champ d'action de la tête oscillante (17), un dispositif d'éjection et de pressage (29, 30) pouvant être commandé, agissant sur l'élément (B) dans la zone de jonction est prévu, **en ce qu'**un dispositif de régulation programmable pour la régulation de la pression de friction (R') avec une allure de courbe pouvant être choisie est prévu, et **en ce qu'**un dispositif de commande pour la commande des dispositifs de serrage (3, 4), du dispositif de pressage (16), de la tête oscillante (17) et du dispositif d'éjection et de pressage (29, 30) est prévu.

17. Dispositif selon la revendication 16, **caractérisé en ce que** pour générer un déplacement de friction (P6) circulaire, la tête oscillante (17) est disposée de manière excentrée sur un arbre d'entraînement (18) pouvant être entraîné, et **en ce que** la tête oscillante (17) est guidée latéralement, de préférence par des guidages parallèles (25, 25').

18. Dispositif selon l'une quelconque des revendications 16 ou 17, **caractérisé en ce qu'**un dispositif de mesure (26) est prévu pour mesurer la profondeur de soudage et pour fixer le point de départ de la régulation de la pression de friction (R').

19. Dispositif selon l'une quelconque des revendications 16 à 18, **caractérisé en ce que** le dispositif d'éjection et de pressage présente un tampon d'expulsion (29) qui agit sur l'élément (B) dans la zone de jonction des éléments (A, B).

20. Dispositif selon l'une quelconque des revendications 16 à 19, **caractérisé en ce que** la valeur maximale (R3) de la pression appliquée (R) est générée par le déplacement (P5) du tampon d'expulsion (29) contre le sens d'action (P4) du dispositif de pressage (16).
